# EUROPÄISCHE PATENTSCHRIFT

(11) **EP 1 210 251 B1**
(45) Veröffentlichungstag und Bekanntmachung des Hinweises auf die Patenterteilung: **06.10.2004**
(21) Anmeldenummer: 00969246.8
(22) Anmeldetag: 24.08.2000
(51) Int. Cl.: B60R 21/01, H01F 17/06, H01R 13/66

(54) **VORRICHTUNG ZUR ANSTEUERUNG EINES AIRBAGS**
DEVICE FOR TRIGGERING AN AIRBAG
DISPOSITIF POUR AMORCER UN AIRBAG

(30) Priorität: 08.09.1999 DE 19942815
(43) Veröffentlichungstag der Anmeldung: 05.06.2002
(73) Patentinhaber: DaimlerChrysler AG, 70567 Stuttgart (DE)
(72) Erfinder: DAISS, Michael, 70794 Filderstadt (DE); LÖWEN, Klaus-Dieter, 72336 Balingen (DE); REINHARDT, Matthias, 71067 Sindelfingen (DE)
(86) Internationale Anmeldenummer: PCT/EP2000/008244
(87) Internationale Veröffentlichungsnummer: WO 2001/017823

(56) Entgegenhaltungen:
- EP-A- 0 655 754
- DE-A- 4 136 248
- DE-U- 29 900 178

## Beschreibung

Die Erfindung betrifft eine Vorrichtung zur Ansteuerung eines Airbags mit einem Steuergerät, einem Zündmittel zum Zünden des Airbags und elektrischen Leitungen, die das Steuergerät mit dem Zündmittel verbinden, wobei in die elektrischen Leitungen eine Spule zur Dämpfung von hochfrequenten Störströmen eingeschaltet ist, von der wiederum Störströme in den Leitungen zum Zündmittel induziert werden können, wenn ein äußeres elektromagnetisches Störfeld vorhanden ist. Eine derartige Vorrichtung ist aus der DE-U-299 00 178 bekannt.

Zur Ansteuerung von Airbags in Kraftfahrzeugen sind Schaltungen bekannt, die ein Steuergerät aufweisen, über das ein Zündmittel zur Zündung des Airbags angesteuert wird. Als Zündmittel sind sogenannte Zündpillen bekannt, die bspw. eine Gaspatrone zünden, wenn der Ansteuerstrom am Eingang der Zündpille einen Schwellwert übersteigt.

Um die in den elektrischen Leitungen durch starke elektromagnetische Felder induzierten Störströme abzuschwächen, wird in die elektrischen Leitungen zwischen das Steuergerät und die Zündpille bereits eine Spule geschaltet. Durch die Spule werden insbesondere hochfrequente Störströme in den Leitungen reduziert. Die Spule ist dabei derart mit der Zündpille elektrisch leitend verbunden, daß die Länge der elektrischen Leitungen minimal ist. Im Fall eines äußeren, nicht von der Spule selbst erzeugten Magnetfelds induziert die Spule selbst Störströme in den elektrischen Leitungen. Das Verhalten ist mit der Sekundärwicklung eines Transformators vergleichbar, wenn der durch den Kern fließende magnetische Fluß als das äußere elektromagnetische Feld angesehen wird.

Die DE 299 00 178 U1 zeigt einen Gurtstraffer mit einem Gasgenerator, wobei dort innerhalb eines zylinderförmigen Gehäuses ein Schaltkreis mit einer Spule vorgesehen ist, wodurch eingestreute höherfrequente Signale nicht zur Zündstrecke gelangen sollen.

Die DE 4 136 248 A1 offenbart einen Spulenstecker, der innerhalb eines Steckergehäuses zwei gegensinnig zueinander um denselben Kern gewickelte Spulen aufweist. Die Spulen sind in zwei voneinander unabhängigen elektrischen Leitungen angeordnet, wobei weder die Beschaltung noch die Funktion der beiden Spulen genauer erläutert ist.

Es ist Aufgabe der vorliegenden Erfindung, eine Vorrichtung der eingangs genannten Art so auszugestalten und weiterzubilden, daß die äußeren Auswirkungen eines Magnetfeldes auf die Spule kompensiert und dadurch die Störströme in den Leitungen reduziert werden.

Diese Aufgabe wird erfindungsgemäß durch eine Vorrichtung mit den Merkmalen des Patentanspruchs 1 gelöst. Danach ist zur Kompensation des durch das äußere Magnetfeld in der Spule hervorgerufenen Störstroms eine Kompensationsspule in die elektrischen Leitungen eingeschaltet und im Umfeld der Spule so angeordnet, daß die in Folge des außeren Magnetfeldes in der Kompensationsspule hervorgerufenen induzierten Kompensationsströme den Störströmen entgegengesetzt sind. Dadurch heben sich die durch das äußere Magnetfeld hervorgerufenen Ströme gegenseitig auf und zudem werden wie beim Stand der Technik auch, die hochfrequenten Ströme innerhalb der elektrischen Leitungen herausgefiltert.

Erfindungsgemäß ist erkannt worden, daß der Einfluß eines äußeren Magnetfeldes in der Spule vorteilhaft durch eine Kompensationsspule kompensiert werden kann. Dabei werden außerdem durch geeignete Dimensionierung die hochfrequenten Ströme in den elektrischen Leitungen durch den Wechselstromwiderstand der in Serie geschalteten Spulen, wie dies auch bei lediglich einer Spule schon der Fall war, reduziert. Gleichzeitig werden durch die antiparallel angeordneten Spulen die in Folge eines äußeren Magnetfeldes induzierten Gesamtstörströme in der Spule erheblich reduziert. Die Kompensationsspule vermindert dadurch die negativen Effekte, die sich aufgrund des äußeren Störfeldes ergeben.

Bevorzugt sind die Spule und die Kompensationsspule in der selben Leitung vorgesehen und dort in Serie geschaltet. Infolgedessen erzeugt das äußere elektromagnetische Feld in den beiden Spulen die gleichen, aber entgegengesetzt wirkenden Ströme. Über die Dimensionierung, Ausführung und Anordnung der Spulen ist es dann möglich, daß die durch das äußere Störfeld induzierten Ströme gegensinnig gerichtet sind und dieselbe Stärke aufweisen, so daß sie sich gegenseitig auslöschen. Es entstehen somit, in Folge eines äußeren Störfeldes, keine zusätzlichen Störströme am zu schützenden Verbraucher, insbesondere einer Zündpille. Durch die Anordnung der Spulen werden einerseits die hochfrequenten Störströme in den Leitungen und die durch ein äußeres Magnetfeld induzierten Ströme in der Spule minimiert.

Bevorzugt ist die Kompensationsspule antiparallel zur Spule angeordnet. Da die beiden Spulen in Serie geschaltet sind, verlaufen dann die Wicklungen der beiden Spulen derart zueinander, daß sich gegensinnige Spulenfelder ergeben. Dazu kann einerseits die Wicklungshöhe und andererseits der Wicklungssinn in Wicklungsrichtung angepaßt sein.

Zur Veränderung des induzierten Stromes und damit zur Festlegung des Kompensationsverhaltens der Kompensationsspule kann das Material des Spulenkerns oder die Orientierung der Spulenwicklung oder die Anzahl der Wicklungen angepaßt werden. Da wegen der Serienschaltung der Spulen der gleiche Strom durch die Wicklungen der beiden Spulen fließt, wird das Spulenfeld bevorzugt über die eben genannten Parameter angepaßt. Deswegen kann sich der induzierte Summenstrom unterschiedlich gewickelter Spulen dennoch kompensieren (zu Null werden), wenn bspw. für beide Spulen unterschiedliche Materialien verwendet werden und deren elektromagnetische Felder für die Kompensation abgeglichen werden.

Bei einer anderen Weiterbildung der Erfindung ist der Spulenkern als geschlossener Kern ausgebildet, um den entweder die Spule oder die Kompensationsspule oder beide Spulen gewickelt sind. Bei Verwendung lediglich eines einzigen Ringkerns können die Spule und die Kompensationsspule zu einer Gesamtspule zusammengefaßt sein, so daß um den Ringkern lediglich die Gesamtspule gewickelt ist. Der Spulenkern ist insbesondere als Ringkern ausgebildet. Der Ringkern kann dabei einen kreisförmigen Querschnitt oder einen im Wesentlichen rechteckigen Querschnitt aufweisen, wobei der Ringkern zylinderringförmig ausgebildet ist. Der Ringkern hat dann die Form eines Torus, der an einen Zylindermantel angenähert ist. In diesem Fall ist dann eine Spulenwicklung nicht im Wesentlichen kreisförmig, sondern entsprechend dem Querschnitt rechteckig oder oval ausgebildet.

Es hat sich in Bezug auf eine Ausführung mit zwei Ringkernen herausgestellt, daß bei einer auf den ersten Ringkern gewickelten Spule und auf den zweiten Ringkern gewickelten Kompensationsspule die beiden Spulen jeweils nur auf einer Ringhälfte vorgesehen sind. Werden bei parallel nebeneinander angeordneten Ringkernen diese in Richtung ihrer gemeinsamen Achse betrachtet, so ist beispielsweise in Blickrichtung die Spule auf dem vorderen Ringkern nur um die rechte Ringseite und die Kompensationsspule auf dem hinteren Ringkern nur um die linke Ringseite gewickelt.

Bevorzugt sind die Wicklungshöhen, d.h. die Ganghöhen der Wicklungen, in gleichem Abstand zueinander angeordnet. Dadurch wird der induzierte Summenstrom in Folge eines äußeren Magnetfeldes wirkungsvoll eliminiert. Für eine optimale Funktion müssen die Ganghöhen der Wicklungen in gleichem Abstand zueinander angeordnet sein und zwar über dem gesamten Mantel des Kerns. Jede Abweichung von dieser gleichmäßigen Wicklung verschlechtert das gewünschte Kompensationsergebnis.

Bei einer besonders bevorzugten Weiterbildung der Erfindung ist in den Leitungen zwischen dem Steuergerät und dem Zündmittel ein Stecker vorgesehen, wobei eine Spule innerhalb des Steckers oder im Bereich des Steckers angeordnet ist. Die Spule könnte innerhalb eines isolierenden Materials zwar auch außen am Stecker angeordnet sein, jedoch ist eine Anordnung der Spule innerhalb des Gehäuses des Steckers von besonderem Vorteil. Die Spule ist in diesem Fall besonders vorteilhaft gekapselt. Das Gehäuse kann dazu an die äußere Form der Spule angepaßt sein. Je nach äußerer Form der Spule ist dann das Gehäuse im Wesentlichen zylinder- oder kubusförmig und/oder bspw. auch wasserabweisend ausgebildet.

Erfindungsgemäß können die Spule und die Kompensationsspule innerhalb des Gehäuses des Steckers angeordnet sein. Dann ist das Gehäuse des Steckers am Besten zweiteilig ausgebildet und läßt sich beim Bestücken mit Steckerteilen auseinanderklappen. Beide Spulen können innerhalb des Gehäuses mit zueinander parallelen Achsen angeordnet sein. Dazu können zwei geschlossene oder unterbrochene Ringkerne benachbart zueinander angeordnet sein. Die Spule kann um einen Ringkern und die Kompensationsspule um den anderen Ringkern gewickelt und beide Spulen können innerhalb des Gehäuses gegeneinander isoliert sein. Da beide Spulen in Serie geschaltet sind, ist eine Leitung zunächst um einen Spulenkern zur Bildung einer Spule und dann um den anderen Spulenkern zur Bildung der anderen Spule, bspw. der Kompensationsspule, gewickelt. Beide Spulen können bei Blickrichtung parallel zur gemeinsamen Ringkernachse halbseitig und seitlich zueinander versetzt gewickelt sein. Dadurch verringert sich die kapazitive Kopplung beider Spulen. Dies ist von Vorteil, wenn die Störströme im Bereich der Zuleitung zu den Spulen eingekoppelt werden und eine ausreichend gute Dämpfung der Störungen erreicht werden soll.

Wie bereits erwähnt, kann aber auch nur ein Ringkern vorgesehen sein, auf den eine Gesamtspule gewickelt ist, die zu einem Teil die Spule und zum anderen Teil die Kompensationsspule ausbildet. Die durch ein externes Feld in dem Teil der Gesamtspule erzeugten Effekte, der die Kompensationsspule bildet, eliminieren die durch dasselbe externe elektromagnetische Feld in dem anderen Teil der Gesamtspule gebildeten Effekte. Der andere Teil der Gesamtspule bildet dabei die ursprünglich zum Filtern der hochfrequenten Ströme vorgesehene Spule.

Es gibt nun verschiedenen Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung mehrerer Ausführungsformen zu verweisen. Es zeigen jeweils, in schematischer Darstellung,
- Fig. 1: eine Ansicht der in der elektrischen Leitung vorgesehenen Spule mit elektromagnetischem Feld und dazu antiparallel angeordneter Kompensationsspule mit Gegenfeld gemäß der vorliegenden Erfindung,
- Fig. 2: eine Ansicht eines Ringkerns mit einer darauf gewickelten Spule und einer Kompensationsspule gemäß einer ersten Ausführungsform der vorliegenden Erfindung und
- Fig. 3: eine Draufsicht auf ein geöffnetes Gehäuse eines Steckerteils mit Steckerkontakten, einer Spule sowie einer Kompensationsspule gemäß einer dritten Ausführungsform der vorliegenden Erfindung.

Die Vorrichtung 1 zur Ansteuerung eines Airbags 2 weist ein Steuergerät 3 auf, das über elektrische Leitungen 4 mit einer Zündpille 5 verbunden ist. Die Zündpille 5 zündet den Airbag 2, wenn der durch sie fließende Strom einen Grenzwert überschreitet. In den elektrischen Leitungen 4 zwischen dem Steuergerät 3 und der Zündpille 5 ist eine Spule 6 vorgesehen, die Störströme auf den elektrischen Leitungen 4 dämpfen soll.

Die Störströme entstehen hauptsächlich durch Einkopplung elektromagnetischer Felder in die elektrischen Leitungen 4. Dabei handelt es sich meist um hochfrequente Störströme. Der Innenwiderstand der Spule 6 steigt linear mit der Frequenz der Störströme, so daß bei hohen Frequenzen der Stromfluß durch die Spule 6 eingeschränkt ist. Dabei induziert die Spule 6 selbst Störströme in den elektrischen Leitungen 4, wenn ein äußeres Störfeld vorhanden ist.

Eine Kompensationsspule 8 ist benachbart zu der Spule 6 angeordnet und derart ausgerichtet, daß im Fall eines äußeren magnetischen Feldes ein entgegengesetzt gerichteter Strom gleicher Größe induziert wird, so daß der induzierte Summenstrom zu Null wird. Dabei ist die Kompensationsspule 8 in der Art mit der Spule 6 verschaltet, daß ihre dämpfende Wirkung gegen Hochfrequenzstörer in den Leitungen 4 nicht aufgehoben, sondern sogar erhöht wird. Die Kompensationsspule 8 ist hinsichtlich Windungszahl, Material und Ausführung wie die Spule 6 vorgesehen. Die Kompensationsspule 8 ist dabei so dimensioniert, daß die dämpfende Wirkung auf die hochfrequenten Störströme nicht aufgehoben wird. Ferner müssen die Spule 6 und die Kompensationsspule 8 so angeschlossen und angeordnet sein, daß im Fall eines von außen angelegten Magnetfeldes kein Strom in die elektrischen Leitungen 4 zur Zündpille induziert wird. Die beiden Spulen 6 und 8 sind derart miteinander verbunden, daß sich die Summe der induzierten Spannungen der in Serie geschalteten Spulen zu Null ergibt. Infolgedessen kommt es in den elektrischen Leitungen 4 nicht zur Erzeugung weiterer Störströme.

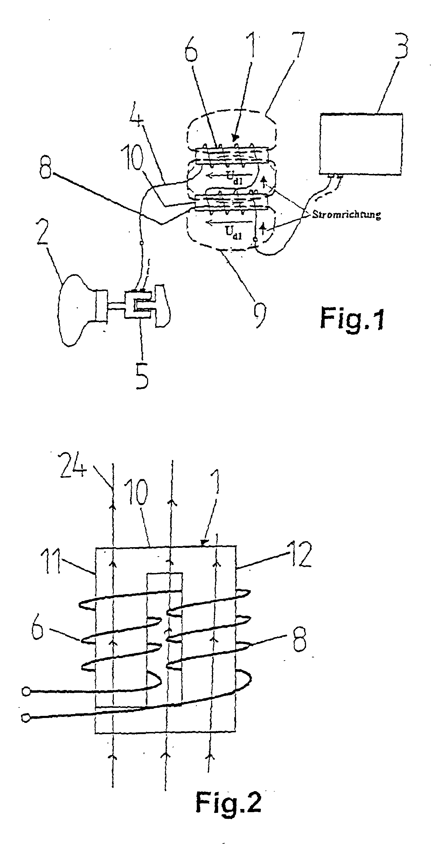

Bei der in Figur 1 dargestellten Ausführungsform sind beide Spulen 6 und 8 exakt antiparallel zueinander ausgerichtet, besitzen also gleichsinnige Wicklung, jedoch eine umgekehrte Anschlußfolge und sind miteinander elektrisch leitend verbunden. Diese Anordnung wird erfindungsgemäß auch als antiparallele Serienschaltung der Spule 6 und der Kompensationsspule 8 bezeichnet. Die Forderung einer parallelen Ausrichtung in geringstem Abstand ist erforderlich, weil bei einem inhomogenen Feld die Unterschiede in der Durchflutung der beiden Spulen 6 und 8 möglichst gering ausfällt.

In Figur 2 sind die Spule 6 und die Kompensationsspule 8 auf einem gemeinsamen geschlossenen Spulenkern 10 gewickelt. Dabei ist die Spule 6 um einen Schenkel 11 und die Kompensationsspule 8 um einen gegenüberliegenden Schenkel 12 des geschlossenen Spulenkerns 12 gewickelt. Beide Spulen 6 und 8 sind mit gegenphasiger Ansteuerung entsprechend gleichsinnig gewickelt. Mit 24 ist das äußere Störfeld 24 bezeichnet.

Durch die beschriebene Anordnung läßt sich eine deutliche Verringerung der Einkopplung äußerer elektromagnetischer Wechselfelder 24, in der Praxis eine Verringerung um mindesten Faktor 8, erreichen. Um zu verhindern, daß die Resonanzfrequenz beider Spulen 6, 8 im Vergleich zu einer Spule zu tieferen Frequenzen hin verschoben wird, kann die Induktivität der beiden Spulen 6, 8 bei der Doppeldrosselausführung den halben Wert der Induktivität der Einzeldrosselausführung betragen.

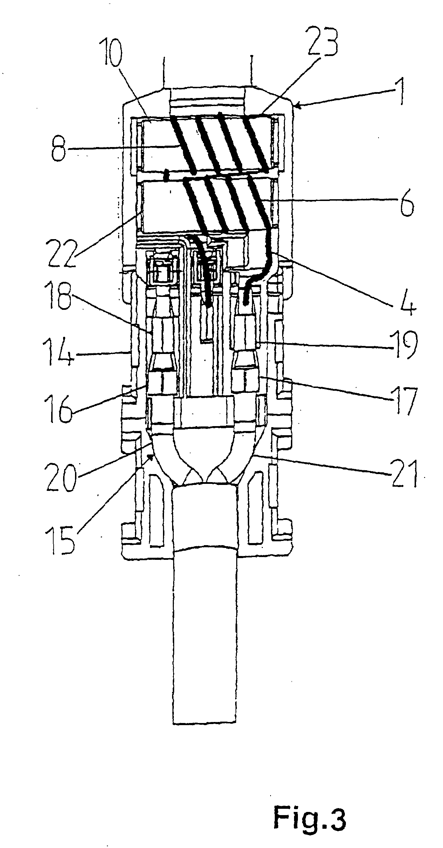

In Figur 3 ist schließlich noch eine Ausführungsform für ein Kraftfahrzeug gezeigt, wie diese im Zusammenhang mit einem Airbag zum Einsatz kommt. Die Spule 6 und die Kompensationsspule 8 sind dabei innerhalb eines Gehäuses 14 eines zwischen dem Steuergerät 3 und der Zündpille 5 angeordneten Steckverbinders 15 vorgesehen. Innerhalb des Gehäuses 14 sind zusätzlich je ein Steckerkontakt 16, 17 und die entsprechenden Buchsen 18 bzw. 19 zweier separater Leitungen 20, 21 angeordnet. Die beiden Spulen sind in eine elektrische Leitung 21 und dort hintereinander in Serie geschaltet. Die Spule 6 und die Kompensationsspule 8 sind auf separate, zueinander parallel angeordnete Spulenkerne 22 und 23 gewickelt. Die Spulenachsen bei dieser Ausführungsform sind zueinander parallel angeordnet und die Wicklung um beide Kerne ist wiederum gleichsinnig, aber gegenphasig angesteuert vorgesehen. Das Gehäuse des Steckverbinders bei dieser Ausführungsform ist dabei sehr kompakt und zur Erleichterung der Bestückung aufklappbar ausgeführt.

## Patentansprüche

1. Vorrichtung zur Ansteuerung eines Airbags (2) mit einem Steuergerät (3), einem Zündmittel (5) zum Zünden des Airbags (2) und elektrischen Leitungen (4), die das Steuergerät (3) mit dem Zündmittel (5) verbinden, wobei in die elektrischen Leitungen (4) eine Spule (6) zur Dämpfung von hochfrequenten Störströmen eingeschaltet ist, von der wiederum Störströme in den Leitungen (4) zum Zündmittel (4) induziert werden können, wenn ein äußeres elektromagnetisches Störfeld (7) vorhanden ist, **dadurch gekennzeichnet, daß** zur Verringerung des Einflusses des äußeren elektromagnetischen Störfeldes (7) eine Kompensationsspule (8) in die elektrischen Leitungen (4) eingeschaltet und im Umfeld der Spule (6) so angeordnet ist, daß der induzierte Strom (9) der Kompensationsspule (8) dem durch das äußere Störfeld (7) in der Spule (6) induzierten Störstrom entgegenwirkt und daß ein Ende der Spule (6) mit einem Ende der Kompensationsspule (8) elektrisch leitend verbunden ist.

2. Vorrichtung nach Anspruch 1, **dadurch gekennzeichnet, daß** die Spule (6) und die Kompensationsspule (8) in der selben elektrischen Leitung (4) in Serie geschaltet sind.

3. Vorrichtung nach Anspruch 1 oder 2, **dadurch gekennzeichnet, daß** durch die Anordnung der Kompensationsspule (8) in Bezug zu der Spule (6) die Unterdrückung der eingekoppelten elektromagnetischen Störfelder (7), gegenüber der Anordnung mit nur einer Spule (6) ohne Kompensationsspule (8), nicht nachteilig beeinflußt wird.

4. Vorrichtung nach einem der Ansprüche 1 bis 3, **dadurch gekennzeichnet, daß** die Kompensationsspule (8) antiparallel, d.h. bei gleichsinnigem Wicklungssinn und gegenphasiger Ansteuerung, zu der Spule (6) angeordnet ist.

5. Vorrichtung nach einem der Ansprüche 1 bis 4, **dadurch gekennzeichnet, daß** die Spule (6) und die Kompensationsspule (8) einen Spulenkern (10) aus dem gleichen Material und/oder die gleiche Spulenwicklungsorientierung und/oder die gleichen Wicklungszahlen aufweisen._

6. Vorrichtung nach einem der Ansprüche 1 bis 5, **dadurch gekennzeichnet, daß** ein Spulenkern (10) vorgesehen ist, um den die Spule (6) und die Kompensationsspule (8) gewickelt sind.

7. Vorrichtung nach einem der Ansprüche 1 bis 6, **dadurch gekennzeichnet, daß** der Spulenkern (10) als geschlossener Kern, insbesondere als Ringkern (13), ausgebildet ist.

8. Vorrichtung nach Anspruch 7, **dadurch gekennzeichnet, daß** der geschlossene Spulenkern (10) als Zylinderring ausgebildet ist.

9. Vorrichtung nach einem der Ansprüche 1 bis 8, **dadurch gekennzeichnet, daß** die Ganghöhen der Spulenwicklungen gleich groß sind und/oder sich über den gesamten Kernmantel gleichmäßig verteilen.

10. Vorrichtung nach einem der Ansprüche 1 bis 9, **dadurch gekennzeichnet, daß** in den Leitungen (4) zwischen dem Steuergerät (3) und dem Zündmittel (5) ein Steckverbinder (15) vorgesehen ist und das zumindest eine der Spulen (6, 8) im Bereich oder innerhalb des Steckverbinders (15) angeordnet ist.

11. Vorrichtung nach Anspruch 10, **dadurch gekennzeichnet, daß** das Gehäuse (14) des Steckverbinders (15) im Wesentlichen zylinder- oder kubusförmig ausgebildet ist.

12. Vorrichtung nach einem der Ansprüche 10 oder 11, **dadurch gekennzeichnet, daß** der Stecker mehrteilig ausgebildet ist und/oder die Spule (6) und die Kompensationsspule (8) innerhalb eines Steckerteils des Steckverbinders(15) angeordnet sind.

13. Vorrichtung nach einem der Ansprüche 10 bis 12, **dadurch gekennzeichnet, daß** die beiden Spulen (6, 8) innerhalb des Steckerteils so angeordnet sind, die beiden Spulenachsen parallel zueinander angeordnet sind.

14. Vorrichtung nach einem der Ansprüche 1 bis 13, **dadurch gekennzeichnet, daß** zumindest eine der Spulen (6, 8) innerhalb des Gehäuses (14) des Zündmittels (5) angeordnet ist.

15. Vorrichtung nach einem der Ansprüche 1 bis 14, **dadurch gekennzeichnet, daß** die Spulen (6, 8) passgenau innerhalb eines Gehäuses (14) angeordnet sind.

16. Vorrichtung nach Anspruch 1, **dadurch gekennzeichnet, daß** die elektrische Leitung (4) von einem Kontakt des Steckverbinders (15) zunächst um einen Spulenkern (10) zur Bildung der Spule (6) und danach um einen parallel dazu angeordneten Spulenkern (10) zur Bildung der Kompensationsspule (8), oder umgekehrt, gewickelt ist.

## Claims

1. Device for triggering an air bag (2) with a controller (3), a firing means (5) for firing the air bag (2) and electric lines (4) connecting the controller (3) to the firing means (5), a coil (6) for attenuating highfrequency interference currents being connected into the electric lines (4), which can in turn induce interference currents in the lines (4) to the firing means (4) in the presence of an external electromagnetic interference field,
**characterised in that** a compensation coil (8) is connected into the electric lines (4) in order to reduce the influence of the external electromagnetic interference field (7) and is disposed in the vicinity of the coil (6) so that the induced current (9) of the compensation coil (8) counteracts the interference current induced in the coil (6) by the external interference field (7) and one end of the coil (6) is electrically connected to one end of the compensation coil (8).

2. Device as claimed in claim 1, **characterised in that** the coil (6) and the compensation coil (8) are connected into the same electric line (4) in series.

3. Device as claimed in claim 1 or 2, **characterised in that** providing the compensation coil (8) in addition to the coil (6) does not adversely affect suppression of the coupled electromagnetic interference fields (7) as compared with providing only a coil (6) without a compensation coil (8).

4. Device as claimed in one of claims 1 to 3, **characterised in that** the compensation coil (8) is disposed anti-parallel with the coil (6), i.e. in the same winding direction and with opposite-phase activation.

5. Device as claimed in one of claims 1 to 4, **characterised in that** the coil (6) and the compensation coil (8) have a coil core (10) made from the same material and/or the same coil winding orientation and/or the same number of windings.

6. Device as claimed in one of claims 1 to 5, **characterised in that** a coil core (10) is provided, around which the coil (6) and the compensation coil (8) are wound.

7. Device as claimed in one of claims 1 to 6, **characterised in that** the coil core (10) is provided in the form of a closed core, in particular an annular core (13).

8. Device as claimed in claim 7, **characterised in that** the closed coil core (10) is a cylinder ring.

9. Device as claimed in one of claims 1 to 8, **characterised in that** the pitch heights of the coil windings are of the same size and/or are uniformly distributed across the entire core external surface.

10. Device as claimed in one of claims 1 to 9, **characterised in that** a plug connector (15) is provided in the lines (4) between the controller (3) and the firing means (5) and at least one of the coils (6, 8) is disposed in the vicinity of or inside the plug connector (15).

11. Device as claimed in claim 10, **characterised in that** the housing (14) of the plug connector (15) is essentially cylindrical or cuboid in shape.

12. Device as claimed in one of claims 10 or 11, **characterised in that** the plug is of a multi-part design and/or the coil (6) and the compensation coil (8) are disposed inside one of the plug parts of the plug connector (15).

13. Device as claimed in one of claims 10 to 12, **characterised in that** the two coils (6, 8) are disposed inside the plug part in such a way that the two coil axes are disposed parallel with one another.

14. Device as claimed in one of claims 1 to 13, **characterised in that** at least one of the coils (6, 8) is disposed inside the housing (14) of the firing means (5).

15. Device as claimed in one of claims 1 to 14, **characterised in that** the coils (6, 8) sit in a snug fit inside a housing (14).

16. Device as claimed in claim 1, **characterised in that** the electric line (4) is wound from a contact of the plug connector (15) firstly around a coil core (10) to form the coil (6) and then around a coil core (10) disposed parallel therewith to form the compensation coil (8), or vice versa.

## Revendications

1. Dispositif pour amorcer un airbag (2) avec un appareil de commande (3), un moyen d'allumage (5) pour allumer l'airbag (2) et des fils électriques (4) qui relient l'appareil de commande (3) au moyen d'allumage (5), une bobine (6) étant intercalée dans les fils électriques (4) pour atténuer les courants parasites à haute fréquence, bobine à partir de laquelle les courants parasites peuvent, à leur tour, être induits vers le moyen d'allumage (5) dans les fils (4) lorsqu'un champ parasitaire électromagnétique extérieur (7) est présent, **caractérisé en ce que**, pour diminuer l'influence du champ parasitaire électromagnétique extérieur (7), une bobine de compensation (8) est intercalée dans les fils électriques (4) et disposée dans le champ ambiant de la bobine (6) de telle manière que le courant induit (9) de la bobine de compensation (8) agisse en sens inverse du courant parasite induit dans la bobine (6) par le champ parasitaire extérieur (7) et qu'une extrémité de la bobine (6) soit reliée de manière électroconductrice à une extrémité de la bobine de compensation (8).

2. Dispositif selon la revendication 1, **caractérisé en ce que** la bobine (6) et la bobine de compensation (8) sont branchées en série dans les mêmes fils électriques (4).

3. Dispositif selon la revendication 1 ou 2, **caractérisé en ce que**, grâce à la disposition de la bobine de compensation (8) par rapport à la bobine (6), la suppression du champ parasitaire électromagnétique extérieur couplé (7) n'est pas influencée de manière désavantageuse, par rapport à la disposition avec une seule bobine (6) sans bobine de compensation (8).

4. Dispositif selon l'une quelconque des revendications 1 à 3, **caractérisé en ce que** la bobine de compensation (8) est disposée de manière antiparallèle par rapport à la bobine (6), c'est-à-dire dans le même sens d'enroulement et avec un amorçage en opposition de phase.

5. Dispositif selon l'une quelconque des revendications 1 à 4, **caractérisé en ce que** la bobine (6) et la bobine de compensation (8) comprennent un noyau de bobine (10) fait dans la même matière et/ou la même orientation d'enroulement de bobine et/ou les mêmes nombres d'enroulements.

6. Dispositif selon l'une quelconque des revendications 1 à 5, **caractérisé en ce qu'**il est prévu un noyau de bobine (10) autour duquel la bobine (6) et la bobine de compensation (8) sont enroulées.

7. Dispositif selon l'une quelconque des revendications 1 à 6, **caractérisé en ce que** le noyau de bobine (10) est configuré comme un noyau fermé, en particulier comme un noyau toroïdal (13).

8. Dispositif selon la revendication 7, **caractérisé en ce que** le noyau de bobine fermé (10) est configuré comme une bague cylindrique.

9. Dispositif selon l'une quelconque des revendications 1 à 8, **caractérisé en ce que** les pas des enroulements de bobines ont la même taille et/ou sont répartis uniformément sur toute l'enveloppe du noyau.

10. Dispositif selon l'une quelconque des revendications 1 à 9, **caractérisé en ce qu'**il est prévu un connecteur à fiches (15) dans les fils (4) entre l'appareil de commande (3) et le moyen d'allumage (5) et **en ce qu'**au moins l'une des bobines (6, 8) est disposée au voisinage ou à l'intérieur du connecteur à fiches (15).

11. Dispositif selon la revendication 10, **caractérisé en ce que** le boîtier (14) du connecteur à fiches (15) a sensiblement une forme cylindrique ou cubique.

12. Dispositif selon l'une quelconque des revendications 10 ou 11, **caractérisé en ce que** le connecteur à fiches est configuré en plusieurs parties et/ou **en ce que** la bobine (6) et la bobine de compensation (8) sont disposées à l'intérieur d'une partie du connecteur à fiches (15).

13. Dispositif selon l'une quelconque des revendications 10 à 12, **caractérisé en ce que** les deux bobines (6, 8) sont disposées à l'intérieur de la partie de connecteur à fiches de manière à ce que les deux axes des bobines soient disposés parallèlement l'un à l'autre.

14. Dispositif selon l'une quelconque des revendications 1 à 13, **caractérisé en ce qu'**au moins l'une des bobines (6, 8) est disposée à l'intérieur du boîtier (14) du moyen d'allumage (5).

15. Dispositif selon l'une quelconque des revendications 1 à 14, **caractérisé en ce que** les bobines (6, 8) sont disposées à l'intérieur d'un boîtier (14) de manière ajustée.

16. Dispositif selon la revendication 1, **caractérisé en ce que** la ligne électrique (4) est enroulée, à partir d'un contact du connecteur à fiches (15), d'abord autour d'un noyau de bobine (10) pour former la bobine (6) puis autour d'un noyau de bobine (10) disposé parallèlement à celle-ci pour former la bobine de compensation (8), ou inversement.
